Europäisches Patentamt

(19) European Patent Office

Office européen des brevets

(11) EP 0 571 047 B1

(12) **EUROPEAN PATENT SPECIFICATION**

(45) Date of publication and mention
of the grant of the patent:
**18.03.1998 Bulletin 1998/12**

(51) Int. Cl.⁶: **C01B 35/12**, C03C 1/00,
C05C 5/00

(21) Application number: **93201451.7**

(22) Date of filing: **19.05.1993**

(54) **Process for the preparation of precipitated borates**

Verfahren zur Herstellung ausgefällter Borate

Procédé de préparation de borates précipités

(84) Designated Contracting States:
**BE ES FR IT LU NL**

(30) Priority: **22.05.1992 NL 9200913**

(43) Date of publication of application:
**24.11.1993 Bulletin 1993/47**

(73) Proprietor: **BORMINE S.A.**
**CH-1001 Lausanne (CH)**

(72) Inventor:
**Beugels, Hendrik Karel Hubert Maria**
**NL-6191 SL Beek (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**US-A- 4 270 944**

• **CHEMICAL ABSTRACTS, vol. 71, no. 6, 11
August 1969, Columbus, OH (US); S. SCHOLLE
et al., p. 265, AN 25143c**
• **CHEMICAL ABSTRACTS, vol. 95, no. 24, 14
December 1981, Columbus, OH (US); M. NOVAK
et al., p. 133, AN 206225x**
• **CHEMICAL ABSTRACTS, vol. 96, no. 6, 08
February 1982, Columbus, OH (US); p. 159, AN
37810x**
• **CHEMICAL ABSTRACTS, vol. 68, no. 14, 01 April
1968, Columbus, OH (US); V.M. IMAMUTDINOVA,
p. 6106, AN 63057y**

## Description

This invention relates to a process for the preparation of precipitated borate, starting from natural borates, which are decomposed, followed by precipitation, in such a manner that a precipitated borate is obtained which possesses the required quality for numerous applications which are known per se, *inter alia* in the glass industry. In addition, the process control of the present process is preferably such that residual substances are obtained of which a part can be used as innocuous fillers and another part can be reprocessed into useful products, for instance into fertilizer granules.

Numerous natural borates are found as minerals in various places. In this connection, reference can be made to "Gmelin Handbuch der Anorganischen Chemie", Volume 28, "Borverbindungen", part 7 (1975), pp. 1-4. Those minerals usually do not have the desired composition or purity for them to be used as such in industrial processes. An exception is natural colemanite, a calcium borate containing water of crystallization, which, after homogenizing, grinding and drying, can be used directly as a base material in the manufacture of glass, in particular in the manufacture of glass fibers or glass filaments. The fact is that is important for that application to start from a $B_2O_3$-bearing base material which is substantially free of alkali ($Na_2O+K_2O < 1\%$) and natural colemanite satisfies this condition. All percentages mentioned herein are by weight. This natural product, however, has a varying composition and moreover contains a number of detrimental impurities, in particular arsenic compounds and fluoride compounds, which shorten the lifetime of the glass spinning plate and increase the number of filament breaks during glass spinning. Moreover, those impurities end up in the tail gases of the glass manufacture and must be removed therefrom before the tail gases can be emitted.

Instead of natural colemanite, the glass industry also utilizes boric acid, which does not contain the above-mentioned detrimental impurities. Boric acid, however, must be recovered by chemical decomposition. In the current industrial processes, sulfuric acid is used for that purpose, which yields calcium sulfate, with all of the impurities present therein, as an undesired residual substance. Boric acid is moreover rather difficult to handle and a disadvantage inherent to the use thereof is that the energy consumption during the glass manufacture is larger because boric acid contains more chemically bound water than does colemanite.

From Chemical Abstracts, Vol. 71, 1969, p. 265, 25143c, it is known to prepare boric acid by decomposing *inter alia* colemanite with nitric acid. This abstract relates to an investigation of the solubility of the system calcium nitrate-boric acid-water and no precipitated borate is prepared.

The decomposition of boron-containing minerals, in particular kernite and borax, with the aid of diluted nitric acid is also known from Chemical Abstracts, Vol. 95, 1981, page 133, 206225x. Impure boric acid is obtained and, in addition, boric acid-containing residual liquids, which are processed into fertilizers.

Finally, US-A-4,270,944 discloses a method for preparing precipitated calcium borates. The starting material is ulexite, a sodium-containing crude borate, which is decomposed with hydrochloric acid, although sulfuric acid and nitric acid are mentioned in passing. To the decomposition product, calcium chloride is then added, so as to precipitate calcium borates. On account of the large amounts of sodium and chlorine which are necessarily present in the precipitated calcium borates so obtained, they have a high degree of impurity and are totally unsuitable to be used in the manufacture of, for instance, glass fiber filaments.

It is one object of the present invention to provide a precipitated borate which possesses a high purity and can be used as a high-quality base material, *inter alia* in the manufacture of glass fibers, and in the ceramic industry. More particularly, the precipitated borate prepared in accordance with the present invention may at most contain only very minor amounts of $Na_2O+K_2O$, sulfate and chlorine.

It is another object of the present invention to utilize a process control such that residual substances are obtained which can partly be discharged as innocuous waste materials without any problem and partly be reprocessed to obtain products for a useful other application.

The objects indicated hereinabove can be realized in accordance with the invention by decomposing crude borates of a $B_2O_3$ content of at least 25% and a mole ratio of alkali and/or alkaline-earth metal oxide/$B_2O_3$ in the range of 0.4-0.8 by treating them with diluted nitric acid of a concentration of at least 25%, separating the insoluble residues and the boric acid solution obtained, precipitating the desired borate from the boric acid solution in the substantial absence of chloride, and separating, washing, drying and calcining or simultaneously drying and calcining the precipitated borate, to obtain precipitated borate comprising $< 1\%$ $Na_2O+K_2O$, $< 0.5\%$ sulfate, calculated as $SO_3$, and $< 200$ ppm chlorine.

Crude borates of various origins can be used as raw material for carrying out the present process, provided they satisfy the conditions mentioned hereinabove. Preferably used are crude borates having a $B_2O_3$ content of at least 30% and a mole ratio of alkali and/or alkaline-earth metal oxide/$B_2O_3$ in the range of 0.5-0.7. Examples of suitable borates include colemanite, ulexite, hydroboracite, and borax, which have a mole ratio of alkali and/or alkaline-earth metal oxide/$B_2O_3$ of 0.67; 0.60; 0.67; and 0.50, respectively, which corresponds to a weight ratio of 0.54; 0.50; 0.46; and 0.45, respectively. On the other hand, a mineral such as szaibelyite or ascharite having a mole ratio of alkali and/or alkaline-earth metal oxide/$B_2O_3$ of 2.0, corresponding to a weight ratio of 1.16, is unsuitable for use according to the invention, because the decomposition thereof requires too large an amount of nitric acid and, moreover, very large amounts of magnesium nitrate are obtained, for which no useful application exists.

Prior to their decomposition, the crude borates are broken and ground in conventional apparatus, so as to obtain a particle size such that an efficient decomposition can be realized within an acceptable time. The particle size distribution is not particularly critical, so that screening of the ground product can usually be omitted. It has been established that the process can be carried out on an industrial scale very well when the ground product possesses the following particle size distribution: 90% < 100 $\mu$m; 70% < 40 $\mu$m; and 40% < 20 $\mu$m.

The fine-ground crude borate is then supplied to a decomposition reactor, where it is mixed with diluted nitric acid of a concentration of at least 25% and preferably not exceeding 35%. Preferably, diluted nitric acid of a concentration of about 30% is used. The nitric acid, which may also be derived from a residual stream, is typically utilized in a slight stoichiometric excess, for instance of 10%, and the supply of the nitric acid is controlled in such a manner that the pH in the decomposition environment is maintained in the optimum range, which is typically within the range of 4.5-5.5. This is also related to the impurities present in the crude borate, in particular iron and arsenic compounds, which remain present in undissolved condition at the pH value indicated and consequently remain behind in the filter cake later on. The decomposition is preferably carried out at increased temperature, typically at a temperature above 70°C and preferably at a temperature in the range of 80-98°C. This high temperature is not important for the decomposition itself, which proceeds rapidly at room temperature as well, but is important for dissolving the boric acid formed by the decomposition and keeping it dissolved. In practice, decomposition times of 5-45 minutes are used. Although the decomposition can be carried out discontinuously, it is preferably carried out continuously, which provides a number of evident process-technical advantages and at the same time enables better regulation and control of the whole process.

The decomposition with nitric acid as described hereinabove yields a solution of boric acid ($H_3B_2O_3$) which also contains dissolved nitrates (in particular of Ca, Mg and/or Na), while the insoluble residual material of the crude borate is dispersed in the solution. The soluble and the insoluble phases are separated from each other by filtration (filtration 1), for instance while the liquid is still warm, for instance above 70°C. By working at rather high temperatures in this manner, the boric acid remains properly dissolved and a boric acid solution can be obtained of a concentration typically in the range of between 15 and 25% and mostly approximately 20%. The filter cake of filtration 1 is washed out, preferably with warm water, so as to achieve the best possible washing efficiency. The washing waters can be recirculated, for instance to the decomposition phase, and the filter cake can be further processed as described hereinbelow.

From the boric acid solution obtained by filtration 1 insoluble borate is then precipitated. It is not necessary to add a separate precipitant for that purpose all the time. Particularly when the starting material is a crude borate which, for instance, contains calcium, such as colemanite, calcium borate can be precipitated from the boric acid solution obtained by decomposition and filtration, by merely adjusting the pH of that solution to the alkaline pH value necessary for such precipitation. In other cases, one does add a suitable precipitant, the choice of a specific precipitant being dependent *inter alia* on the precipitated borate which one desires to prepare. As a precipitant, for instance a calcium, magnesium, zinc or chromium compound can be used. It is to be made sure that no chloride, such as calcium chloride, is used as a precipitant, since the precipitation should proceed in the substantial absence of chloride so as to avoid the amount of chlorine found in the final product exceeding the maximum amount permitted. When the precipitant is a calcium compound, preferably milk of lime is used, i.e., a suspension of slaked lime (calcium hydroxide) in water, which at the same time provides for the adjustment to the proper alkaline pH. The precipitant may be used in a slight stoichiometric excess, preferably not exceeding approximately 10%. The precipitation is in any case carried out in an alkaline environment, but an incipient precipitation already occurs from pH 4.5 and particularly from pH 6, the equivalence point of the precipitation of calcium borate starting at pH 6 and ending at pH 9.5. The precipitation can be carried out both at a relatively low temperature, for instance at a temperature of 20-40°C, and at a rather high temperature, which is for instance in the range of 60-100°C. The most important difference is that the grain size of the precipitated borate is finer according as the precipitation temperature is higher. This difference in grain size, however, is undone again during subsequent calcination. Although the precipitation can be carried out discontinuously, it is preferred that the precipitation proceeds continuously. The precipitated borate is then recovered by filtering the reaction liquid (filtration 2) and thoroughly washing the filter cake with water.

In the case where the starting material is a crude borate that is rich in sodium and/or potassium, such as ulexite or borax, the precipitated borax generally contains more $Na_2O+K_2O$ than the maximum amount permitted. As far as necessary, this concentration can be reduced, for instance by washing with warm water, for instance of 40-80°C, into which a compound of the same metal as the precipitated borate has been dissolved in an amount sufficient to prevent a substantial amount of the precipitated borate from being dissolved again. Naturally, the compound referred to must not be chloride.

The washed filter cake can be dried, in order to remove the free water, and subsequently be calcined, but in practice the filter cake is often calcined directly, when still wet, so that the free water and the chemically bound water are removed simultaneously. Depending on the calcining conditions chosen, it is thus possible, for instance, to obtain calcium borate satisfying one of the following formulae: $CaO.B_2O_3$ comprising 55.1% $B_2O_3$ or $2CaO.3B_2O_3$ comprising 64.8% $B_2O_3$. In any case, the precipitated borates prepared according to the invention possess a very high purity, for instance of 99.5% or more. Moreover, the precipitated borates do not contain more $Na_2O+K_2O$, sulfate and chlorine

than the maximum amounts as specified herein. This is achieved in accordance with the invention by decomposing the crude borate with nitric acid, by avoiding the introduction of sulfate and chlorine in the further treatment steps, and, in the case where the starting material is a sodium and/or potassium-containing crude borate, by reducing the sodium and/or potassium content as far as necessary through appropriate measures.

The calcined product prepared according to the invention is anhydrous and has many possibilities of application. Very pure, anhydrous precipitated calcium borate prepared according to the present invention is for instance a very valuable product for use in the glass industry, for instance in so-called E glass, which has a $B_2O_3$ content of 6-7% and an alkali ($Na_2O+K_2O$) content of < 1% and which serves for spinning glass fiber filaments. Calcium borate prepared according to the invention can be used in such glass to wholly or partly replace natural colemanite or boric acid, which have the inherent disadvantanges discussed hereinabove.

The filter cake which is obtained in the filtration 1 described above, contains a variety of constituents which are insoluble in the nitric acid decomposition medium. These constituents include constituents which were already present as such in the crude borate and constituents which are formed during the decomposition. The most frequently occurring constituents include quartz, sand, silicates, fluorspar, gypsum, iron and arsenic compounds, insoluble fluoride, in particular calcium fluoride, non-converted crude borate and non-washed out boric acid. From that filter cake, for instance arsenic compounds can be separated because arsenic is a valuable metal with important applications in the electrotechnical industry. Few direct uses exist for the remaining constituents of the filter cake, but because those constituents are not detrimental to the environment, the remainder of the filter cake can be dried, whereafter the solid material obtained may for instance be used as filler in road construction.

The filtrate obtained by filtration 2, i.e., by filtering off the precipitated borate, mainly contains dissolved nitrates, such as calcium, magnesium, sodium and/or potassium nitrate, depending on the nature of the crude borate employed. If necessary, this filtrate can be further thickened and used as a highly-concentrated solution in the preparation of nitrogenous fertilizers in granular form.

The present invention will now be further explained and illustrated in and by the following Examples.

## Example I

1. Decomposition of colemanite according to the reaction equation:

$$2CaO.3B_2O_3.5H_2O + 4HNO_3 + 2H_2O \rightarrow 6H_3BO_3 + 2Ca(NO_3)_2$$

591 kg water were charged to a 800-liter decomposition reactor. The temperature was adjusted to 80°C. 33.69 kg ground colemanite (100% < 250 μm) of a content of approximately 85% were added with stirring (800 rpm). After all of the solid material had been suspended in the water, 64 kg $HNO_3$ (30%) (approx. 110% of the stoichiometrically required amount) were slowly added to the suspension, the temperature being maintained at 80°C and the pH being maintained at a value of 4.5 or higher. The reaction mixture was allowed to react for another 30 minutes, followed by cooling to 30°C. Then the mixture was filtered over filter presses. The filtrate was collected in the precipitation vessel and the residue of the filter presses was washed out with water and dried. The washing waters can be recirculated to the decomposition reactor.

| Overview of the feed: | | | |
|---|---|---|---|
| | $H_2O$ | colemanite (85%) | $HNO_3$ (30%) |
| kg | 591 | 33.69 | 64 |
| mole | | 70 | 305 |

| Yield: | |
|---|---|
| boric acid (calculated as g/l $B_2O_3$ in solution) | 22.0 |
| calcium nitrate (calculated as g/l CaO in solution) | 11.8 |

2. Precipitation at 30°C according to the reaction equation:

$$6H_3BO_3 + 2Ca(NO_3)_2 + 2Ca(OH)_2 \rightarrow 2CaO.3B_2O_3.5H_2O + 2Ca(NO_3)_2 + 6H_2O$$

To 600 liters of filtrate collected in the precipitation vessel, obtained by the method described under 1 hereinabove, 24.1 kg of a $Ca(OH)_2$ slurry (39%) were added with stirring (900 rpm), the temperature rising to 35°C. The pH path of the precipitation was 4.5-9.5. After a total (continued) reaction time of 1 hour, the slurry was filtered off over two filters. The precipitate was washed with water for 15 minutes and then mixed again twice, each time with 50 liters of water, filtered and washed (each time for 15 minutes) and finally blown dry with compressed air. 52 kg of wet product were obtained, which were calcined in an oven at 450°C.

3. Specifications of the final product of the formula $2CaO.3B_2O_3$, obtained by calcination:

| | |
|---|---|
| a. $B_2O_3$ | 65.5 % |
| b. CaO | 34,3 % |
| c. Al | 34 ppm |
| d. Fe | 126 ppm |
| e. $SiO_2$ | 0.15% |
| f. MgO | 271 ppm |
| g. $Na_2O$ | 189 ppm |
| h. $K_2O$ | not found* |
| i. As | 1.6 ppm |
| j. $SO_3$ | not found** |
| k. Sr | 240 ppm |
| l. Cl | not found*** |
| m. COD | 0.04% |

* detection limit of the measuring technique used: 10 ppm
** detection limit of the measuring technique used: 50 ppm
*** detection limit of the measuring technique used: 10 ppm

## Example II

1. Decomposition of colemanite according to the reaction equation:

$$2CaO.3B_2O_3.5H_2O + 4HNO_3 + 2H_2O \rightarrow 6H_3BO_3 + 2Ca(NO_3)_2$$

380 kg water were added to an 800-liter decomposition reactor. The temperature was adjusted to 80°C by means of a spiral through which current was passed. 134.65 kg ground colemanite (100% < 250 µm) of a content of approx. 85% were added with stirring (800 rpm). After all of the solid substance had been suspended in the water, 257.1 kg $HNO_3$ (30%) (approx. 110% of the stoichiometrically required amount) were slowly added to the suspension, the temperature being maintained at 80°C and the pH being maintained at a value of 4.5 or higher. The reaction mixture was allowed to react for another 30 minutes, whereafter the slurry, still warm (approx. 80°C), was filtered over filter presses. The filtrate was collected in a precipitation vessel and the residue of the filter presses was washed out with water and dried. The washing waters can be recirculated to the decomposition reactor.

| Overview of the feed: | | | |
|---|---|---|---|
| | $H_2O$ | colemanite (85%) | $HNO_3$ (30%) |
| kg | 380 | 134.65 | 257.1 |
| mole | | 278 | 1224 |

| Yield: | |
|---|---|
| boric acid (calculated as g/l $B_2O_3$ in solution) | 88.1 |
| calcium nitrate (calculated as g/l CaO in solution) | 47.3 |

2. Precipitation at 80°C according to the reaction equation:

$$6H_3BO_3 + 2Ca(NO_3)_2 + 2Ca(OH)_2 \rightarrow 2CaO.3B_2O_3.5H_2O + 2Ca(NO_3)_2 + 6H_2O$$

To 600 liters of warm filtrate (80°C), collected in the precipitation vessel, obtained by the method described under 1 hereinabove, 94 kg of a $Ca(OH)_2$ slurry (39%) were added with stirring (900 rpm), the temperature rising to 85°C. The pH path of the precipitation was 4.5-9.5. After a total (continued) reaction time of 1 hour, the slurry was cooled to 50°C and filtered over filter presses. The precipitate was washed with water for 15 minutes and then mixed again twice, each time with 50 liters of water, filtered and washed (each time for 15 minutes) and finally blown dry with compressed air. 209 kg of wet product were obtained, which were calcined at 450-500°C in an oven.

3. Specifications of the final product of the formula $2CaO.3B_2O_3$, obtained by calcination:

| | |
|---|---|
| a. $B_2O_3$ | 59.8 % |
| b. CaO | 38,3 % |
| c. Al | 136 ppm |
| d. Fe | 389 ppm |
| e. $SiO_2$ | not found |
| f. MgO | 0.30 ppm |
| g. $Na_2O$ | 200 ppm |
| h. $K_2O$ | 78 ppm |
| i. As | 1.5 ppm |
| j. $SO_3$ | 0.05% |
| k. Sr | not found |
| l. Cl | not found* |
| m. COD | < 0.01% |

\* detection limit of
the measuring technique used: 10 ppm

## Claims

1. A process for the preparation of precipitated borate, characterized in that crude borates of a $B_2O_3$ content of at least 25% and a mole ratio of alkali and/or alkaline-earth metal oxide/$B_2O_3$ in the range of 0.4-0.8 are decomposed by treating them with diluted nitric acid of a concentration of at least 25%, the insoluble residual substances and the boric acid solution obtained are separated from each other, the desired borate is precipitated from the boric acid solution in the substantial absence of chloride, and the precipitated borate is separated, washed, dried and calcined or simultaneously dried and calcined, to obtain precipitated borate comprising < 1% $Na_2O+K_2O$, < 0.5% sulfate, calculated as $SO_3$, and < 200 ppm chlorine.

2. A process according to claim 1, characterized in that crude borates are used which have a mole ratio of alkali and/or alkaline-earth metal oxide/$B_2O_3$ in the range of 0.5-0.7.

3. A process according to claim 2, characterized in that, as crude borate, colemanite or ulexite is used.

4. A process according to claim 2, characterized in that, as crude borate, ulexite is used and the precipitated borate is washed with warm water into which a compound of the same metal as the metal of the precipitated borate has been dissolved.

5. A process according to any one of claims 1-4, characterized in that crude borates are used which have been comminuted to the following particle size distribution: 90% < 100 $\mu$m; 70% < 40 $\mu$m; and 40% < 20 $\mu$m.

6. A process according to any one of claims 1-5, characterized in that diluted nitric acid of a concentration of 25-35% is used.

7. A process according to any one of claims 1-6, characterized in that the pH in the decomposition environment is maintained at a value in the range of 4.5-5.5.

8. A process according to any one of claims 1-7, characterized in that the decomposition of the crude borates is carried out at a temperature in the range of 80-98°C.

9. A process according to any one of claims 1-8, characterized in that the decomposition yields a solution with a boric acid concentration of 15-25%.

10. A process according to any one of claims 1-9, characterized in that the decomposition of the crude borates is carried out continuously.

11. A process according to any one of claims 1-10, characterized in that the borate is precipitated from the boric acid solution obtained by the decomposition, by adjusting the pH to the alkaline pH value necessary for precipitation and by optionally adding a precipitant as well.

12. A process according to claim 11, characterized in that the borate is precipitated by adding milk of lime to the boric acid solution obtained by the decomposition.

13. A process according to any one of claims 1-12, characterized in that the borate is precipitated at a temperature of 60-100°C.

14. A process according to any one of claims 1-13, characterized in that the precipitation of the borate is carried out continuously.

15. A process according to any one of claims 1-14, characterized in that a precipitated borate of a purity of 99.5% or more is prepared.

16. A process for the manufacture of glass fiber filaments comprising the steps of preparing precipitated borate according to the process of any one of claims 1-15 and using the precipitated borate thus prepared as a base material in the manufacture of glass fiber filaments.

**Patentansprüche**

1. Verfahren zur Herstellung von gefälltem Borat, dadurch gekennzeichnet, daß rohe Borate mit einem $B_2O_3$-Gehalt von mindestens 25 % und einem molaren Verhältnis von Alkali- und/oder Erdalkalimetalloxid/$B_2O_3$ im Bereich von 0,4 bis 0,8 durch Behandlung mit verdünnter Salpetersäure mit einer Konzentration von mindestens 25 % zersetzt werden, die unlöslichen Restsubstanzen und die erhaltene Borsäurelösung voneinander getrennt werden, das gewünschte Borat in weitgehender Abwesenheit von Chlorid aus der Borsäurelösung ausgefällt wird und das gefällte Borat abgetrennt, gewaschen, getrocknet und calciniert oder gleichzeitig getrocknet und calciniert wird, um gefälltes Borat zu erhalten, das < 1 % $Na_2O+K_2O$, < 0,5 % Sulfat, berechnet als $SO_3$, und < 200 ppm Chlor enthält.

2. Verfahren gemäß Anspruch 1, dadurch gekennzeichnet, daß rohe Borate verwendet werden, die ein Molverhältnis von Alkali- und/oder Erdalkalimetalloxid/$B_2O_3$ im Bereich von 0,5 bis 0,7 aufweisen.

3. Verfahren gemäß Anspruch 2, dadurch gekennzeichnet, daß als rohes Borat Colemanit oder Ulexit verwendet wird.

4. Verfahren gemäß Anspruch 2, dadurch gekennzeichnet, daß als rohes Borat Ulexit verwendet und das gefällte Borat mit warmem Wasser gewaschen wird, in dem eine Verbindung des gleichen Metalls wie dem Metall des gefällten Borats gelöst wurde.

5. Verfahren gemäß einem der Ansprüche 1 bis 4, dadurch gekennzeichnet, daß rohe Borate verwendet werden, die auf die folgende Partikelgrößenverteilung zerkleinert wurden: 90 % < 100 μm; 70 % < 40 μm; und 40 % < 20 μm.

6. Verfahren gemäß einem der Ansprüche 1 bis 5, dadurch gekennzeichnet, daß verdünnte Salpetersäure mit einer Konzentration von 25 bis 35 % verwendet wird.

7. Verfahren gemäß einem der Ansprüche 1 bis 6, dadurch gekennzeichnet, daß der pH-Wert im Zersetzungsmilieu bei einem Wert im Bereich von 4,5 bis 5,5 gehalten wird.

8. Verfahren gemäß einem der Ansprüche 1 bis 7, dadurch gekennzeichnet, daß die Zersetzung der rohen Borate bei einer Temperatur im Bereich von 80 bis 98 °C durchgeführt wird.

9. Verfahren gemäß einem der Ansprüche 1 bis 8, dadurch gekennzeichnet, daß die Zersetzung eine Lösung mit einer Borsäurekonzentration von 15 bis 25 % ergibt.

10. Verfahren gemäß einem der Ansprüche 1 bis 9, dadurch gekennzeichnet, daß die Zersetzung der rohen Borate kontinuierlich durchgeführt wird.

11. Verfahren gemäß einem der Ansprüche 1 bis 10, dadurch gekennzeichnet, daß das Borat aus der durch Zersetzung erhaltenen Borsäurelösung durch Einstellen des pH-Werts auf einen zur Ausfällung erforderlichen alkalischen pH-Wert und gegebenenfalls auch durch Zugabe eines Fällungsmittels ausgefällt wird.

12. Verfahren gemäß Anspruch 11, dadurch gekennzeichnet, daß das Borat durch Zusatz von Kalkmilch zu der durch die Zersetzung erhaltenen Borsäurelösung ausgefällt wird.

13. Verfahren gemäß einem der Ansprüche 1 bis 12, dadurch gekennzeichnet, daß das Borat bei einer Temperatur von 60 bis 100 °C ausgefällt wird.

14. Verfahren gemäß einem der Ansprüche 1 bis 13, dadurch gekennzeichnet, daß das Fällen des Borats kontinuierlich durchgeführt wird.

15. Verfahren gemäß einem der Ansprüche 1 bis 14, dadurch gekennzeichnet, daß ein gefälltes Borat mit einer Reinheit von 99,5 % oder mehr hergestellt wird.

16. Verfahren zur Herstellung von Glasfaserfilamenten, umfassend die Schritte Herstellen eines gefällten Borats gemäß dem Verfahren nach einem der Ansprüche 1 bis 15 und Verwenden des so hergestellten, gefällten Borats als Basismaterial bei der Herstellung von Glasfaserfilamenten.

**Revendications**

1. Procédé de préparation de borate précipité, caractérisé en ce qu'on décompose des borates bruts ayant une teneur en $B_2O_3$ d'au moins 25 % et un rapport molaire alcali et/ou oxyde de métal alcalino-terreux/$B_2O_3$ dans l'intervalle de 0,4 à 0,8, en les traitant par de l'acide nitrique dilué à une concentration d'au moins 25 %, qu'on sépare les substances résiduelles insolubles et la solution d'acide borique obtenue, qu'on précipite le borate désiré dans la solution d'acide borique en l'absence sensible de chlorure et qu'on sépare le borate précipité, qu'on le lave, qu'on le sèche et qu'on le calcine ou qu'on le sèche et le calcine simultanément, pour obtenir du borate précipité comprenant < 1 % de $Na_2O + K_2O$, < 0,5 % de sulfate calculé en $SO_3$ et < 200 ppm de chlore.

2. Procédé selon la revendication 1, caractérisé en ce que l'on utilise des borates bruts ayant un rapport molaire alcali et/ou oxyde de métal alcalino-terreux/$B_2O_3$ compris dans l'intervalle de 0,5 à 0,7.

3. Procédé selon la revendication 2, caractérisé en ce que l'on utilise de la colémanite ou de l'ulexite comme borate brut.

4. Procédé selon la revendication 2, caractérisé en ce qu'on utilise de l'ulexite comme borate brut et qu'on lave le borate précipité avec de l'eau chaude dans laquelle a été dissous un composé du même métal que le métal du borate précipité.

5. Procédé selon l'une quelconque des revendications 1 à 4, caractérisé en ce qu'on utilise des borates bruts qui ont été broyés à la distribution granulométrique suivante :
   90 % < 100 μm ; 70 % < 40 μm et 40 % < 20 μm.

6. Procédé selon l'une quelconque des revendications 1 à 5, caractérisé en ce qu'on utilise de l'acide nitrique dilué à une concentration de 25 à 35 %.

7. Procédé selon l'une quelconque des revendications 1 à 6, caractérisé en ce qu'on maintient le pH dans l'environnement de décomposition à une valeur comprise dans l'intervalle de 4,5 à 5,5.

8. Procédé selon l'une quelconque des revendications 1 à 7, caractérisé en ce qu'on procède à la décomposition des borates bruts à une température comprise dans l'intervalle de 80 à 98°C.

9. Procédé selon l'une quelconque des revendications 1 à 8, caractérisé en ce que la décomposition donne une solution ayant une concentration en acide borique de 15 à 25 %.

10. Procédé selon l'une quelconque des revendications 1 à 9, caractérisé en ce que la décomposition des borates bruts est effectuée en continu.

11. Procédé selon l'une quelconque des revendications 1 à 10, caractérisé en ce que l'on précipite le borate dans la solution d'acide borique obtenue par la décomposition en ajustant le pH à la valeur alcaline nécessaire pour la précipitation et en ajoutant facultativement un agent de précipitation.

12. Procédé selon la revendication 11, caractérisé en ce qu'on précipite le borate en ajoutant du lait de chaux à la solution d'acide borique obtenue par la décomposition.

13. Procédé selon l'une quelconque des revendications 1 à 12, caractérisé en ce qu'on précipite le borate à une température de 60 à 100°C.

14. Procédé selon l'une quelconque des revendications 1 à 13, caractérisé en ce que la précipitation du borate est effectuée en continu.

15. Procédé selon l'une quelconque des revendications 1 à 14, caractérisé en ce qu'on prépare un borate précipité d'une pureté supérieure ou égale à 99,5 %.

16. Procédé de fabrication de filaments de fibres de verte, comprenant les étapes consistant à préparer du borate précipité selon le procédé selon l'une quelconque des revendications 1 à 15 et à utiliser le borate précipité ainsi préparé comme matériau de base dans la fabrication de filaments de fibres de verre.